# EUROPEAN PATENT APPLICATION

(11) **EP 1 223 565 A1**
(43) Date of publication of application: **17.07.2002**
(21) Application number: 01400091.3
(22) Date of filing: 12.01.2001
(51) Int. Cl.: G07F 7/10

(54) **Transaction system, portable device, terminal and methods of transaction**

(71) Applicant: MOTOROLA, INC., Schaumburg, IL 60196 (US)
(72) Inventor: LIN, Bo, East Kilbride G74 4EZ (GB); Nerot, Sebastien Charles, 78580 Maule (FR)
(74) Representative: McCormack, Derek James

(57) **Abstract**

A method of mutually authenticating a transaction or a message between a Terminal (102) and a Smartcard (104), includes the steps of: transferring key data between a Terminal and a Smartcard; and generating a card key (Kd) at the Terminal (102) based on said key data wherein the generated card key (Kd) is equal to the card key of the Smartcard (104) thereby authenticating a valid Smartcard; and/or generating a Terminal identifier at the Smartcard (104) based on said key data wherein the generated Terminal identifier (IDt) is equal to the Terminal identifier (IDt) of the Terminal (102) thereby authenticating a valid Terminal (102).

A Smartcard, a Terminal (102), a Smartcard command set, a method of generating a session key, a dynamic session key, a set of instructions, a Commit command (352, 354) and a roll-back mechanism are provided.

This provides a high level of security, ensures data integrity and a fast commit processing and fast transaction time.

## Description

### Field of the Invention

This invention relates to a transaction between a portable device, such as a smart card, and a fixed device. The invention is applicable to, but not limited to, a secured transaction using a Contact-less Smartcard.

### Background of the Invention

In the field of this invention, namely secure and effective Smartcard transactions, it is important to insure the cryptographic authentication of both the portable device (Smartcard) and the ground (terminal).
As such, the concept of Mutual authentication between the portable device and the fixed device has been widely used in the Smartcard industry.

Furthermore, it is known that the uniqueness and the non-reproducibility of the cryptographic key, as used to certify the authenticity of the overall transaction, needs to be guaranteed. As such, the concept of Cryptographic Signature (cryptographic key) has been widely used in the Smartcard industry as a reliable means to authenticate messages or transactions.

To complement this authentication process, a random session key, as opposed to a static key, is sometimes used to improve the security of the cryptographic operation involved. This makes a replay attack by a third party much more difficult.

A transaction is implemented as a critical section. The critical section commences, after a successful completion of the mutual authentication. The critical section is completed with a successful verification of the transaction signature. In such transactions, it is known that the integrity of the data stored in the portable device is an important design criterion.

A Smartcard transaction involves more than one file. If a tear occurs in the middle of the transaction, some files might have been updated while other ones remain in the previous state. As a result the whole Smartcard file system is in an inconsistent state.

For example, a transaction log file can have been updated while the internal electronic (E)-purse may not have been debited. For contact-less transactions between a Smartcard and a terminal, time is the most critical parameter.

However, this approach has the disadvantages that Smartcard transactions require writing the transaction data twice. Prior art Smartcard transactions also require management of read and write flags. Such data management and control is suitable for contacted operations.

However, such data management and control is unsuitable for a contact-less environment using EEPROM non-volatile memory technology. Furthermore, such transaction management takes too much time in a Contact-less transaction, which typically must be completed in 200 msec.

A further problem associated with mutual authentication is that such a technique is subject to crypto-analytic attack when the plain-text/cipher-text pair is available at the portable device/ground interface.

Thus there exists a need in the field of the present invention to provide a Smartcard transaction mechanism, a Smartcard/portable device, a Terminal and methods to enable a Smartcard transaction wherein the abovementioned disadvantages may be alleviated.

### Statement of Invention

In accordance with a first aspect of the present invention there is provided a method of mutually authenticating a transaction or a message between a Terminal and a Smartcard, as claimed in claim 1.

In accordance with a second aspect of the present invention there is provided a Smartcard, as claimed in claim 11.

In accordance with a third aspect of the present invention there is provided a Terminal, as claimed in claim 12.

In accordance with a fourth aspect of the present invention there is provided a Smartcard command set, as claimed in claim 13.

In accordance with a fifth aspect of the present invention there is provided a method of generating a session key to authenticate a transaction or a message, as claimed in claim 14.

In accordance with a sixth aspect of the present invention there is provided a Smartcard, as claimed in claim 19.

In accordance with a seventh aspect of the present invention there is provided a Terminal, as claimed in claim 20.

In accordance with a eighth aspect of the present invention there is provided a dynamic session key of a transaction or a message, as claimed in claim 21.

In accordance with a ninth aspect of the present invention there is provided a set of instructions used in a transaction process between a Terminal and a Smartcard, as claimed in claim 22.

In accordance with a tenth aspect of the present invention there is provided a Commit command, as claimed in claim 25.

In accordance with an eleventh aspect of the present invention there is provided a roll-back mechanism, as claimed in claim 26.

In accordance with a twelfth aspect of the present invention there is provided an integrated circuit adapted for use in a Smartcard or terminal, as claimed in claim 29.

### Brief Description of the Drawings

Exemplary embodiments of the present invention will now be described, with reference to the accompanying drawings, in which:

FIG. 1 shows a flowchart of a Terminal-Smartcard mutual authentication process in accordance with a preferred embodiment of the invention.

FIG. 2 shows a Smartcard Operating System Architecture in accordance with a preferred embodiment of the invention.

FIG. 3 shows a transaction session management process in accordance with a preferred embodiment of the invention.

FIG. 4 shows a transaction "Commit" management process in accordance with a preferred embodiment of the invention.

### Description of Preferred Embodiments

In summary, the inventive concepts described herein propose, inter alia, a Smart Card command set and security architecture, preferably for use in Contact-less environments. The inventive concepts find particular applicability in Contact-less environments that are specifically mandated for speed of transaction.

The Smart Card command set and security architecture have applicability to public transport systems such as Train or Bus systems, as well as related fare or debit-based applications such as Parking and Taxis. The commands described are a combination of standard ISO7816 type commands as well as unique commands designed to ensure both security and transaction speed are accommodated in Contact-less type transactions.

Security, transaction integrity and transaction speed are of foremost importance in Contact-less applications. The preferred embodiment of the present invention describes a transaction architecture that tightly integrates all three of these attributes.

In particular, the inventors of the present invention have recognised that the mutual authentication, session key generation and beginning of critical section are distinct concepts that have not yet been merged in the field of Smartcard transactions. Furthermore, the signature of a transaction using data exchanged in both directions has not previously existed. In addition, the proposed mechanism includes the merging of the end-of-session with the authentication of the overall transaction.

A Mutual Authentication command (MAC) is an integration of Internal and External type authenticate commands such as described in ISO7816. This ensures authentication of both the Card and the Terminal during one command to speed transactions without compromising security. To eliminate the possibility of replay-type attacks, a dynamic Session Key is generated for every session (transaction) based on two random numbers.

For added security, and further to the concept of a session, a MAC is generated from all data passed throughout the transaction. This MAC is then verified again at the end of the transaction against the dynamic session key generated at the beginning of the transaction. This eliminates the possibility for a rogue terminal to take over the transaction following the authentication cycle.

Furthermore, to ensure system security, another file type and two unique commands are also defined. Separate Credit Purse and Debit Purse commands allow the system designer the flexibility to ensure that only a key that allows a 'reduction' of stored value amount (key assigned to Debit Purse) may be resident on buses and other transport equipment.

Such a feature is not possible using the Update Binary or Update Record commands of prior art mechanisms that do not regard direction of balance or value change. In addition, it is within the contemplation of the invention that the stored value purse may be pre-defined at personalization time with a maximum balance.

In accordance with one aspect of the preferred embodiment of the invention, to ensure transaction integrity a Rollback mechanism is employed on the card to predictably recover following a transaction tear.

The Commit command described herein is the final step in a transaction and accomplishes two things. First, it uses the session key to validate the transaction data passed throughout the transaction, as described above. Secondly, it commits the data to the card and makes this known to the terminal via a successful command response message.

If the terminal does not receive a successful response to the Commit command it may assume that a rollback will take place on the card at next power cycle, and the transaction data will not be processed on the card. This returns the card to the previous known valid state before the tear occurred.

A second less preferred alternative embodiment of the Commit/Roll Back mechanism is also provided. The alternative Commit/Roll Back mechanism is fast enough to be applicable to contact-less Smartcard applications.

In addition, an original management of record files and their pointers or indexes is used. Data of a file, which has to be protected against tear by this mechanism, can be updated in only one EEPROM write access in the best case. This mechanism is therefore more than twice the speed of prior art mechanisms.

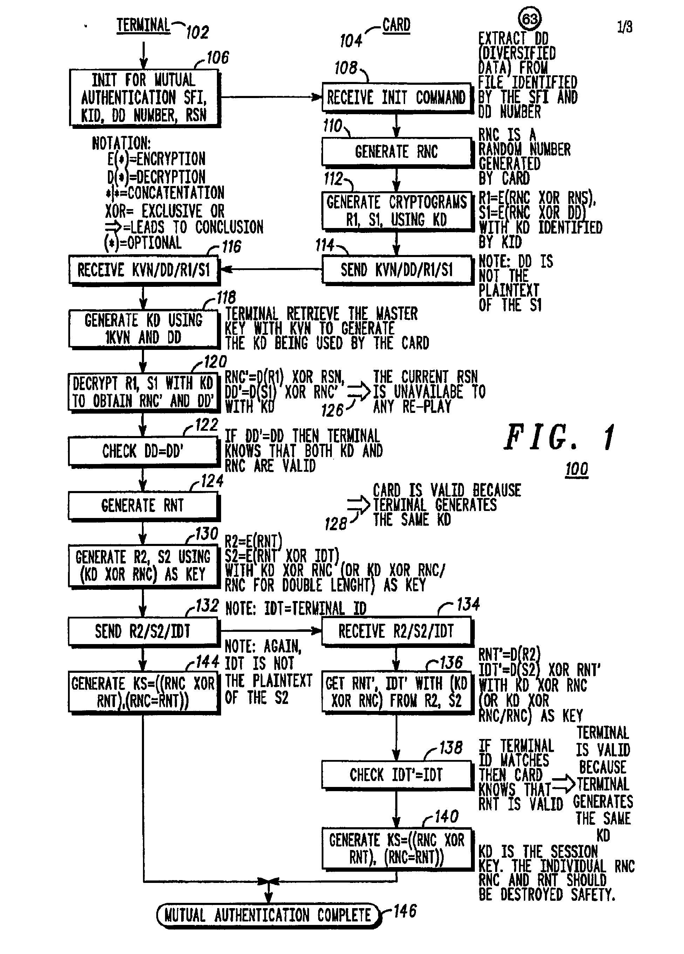

Referring first to FIG. 1, a flowchart 100 indicating the Mutual Authentication and Session Key Generation methodology between a terminal 102 and a Smartcard 104 is provided, in accordance with the preferred embodiment of the invention.

The "Init for Mutual Authentication" command 106 is sent by the fixed terminal to the Smart card to start a transaction. The "Init for Mutual Authentication" command includes:
(i) The identifier of a file that contains diversification data DD. This identifier is sent in the form of an ISO 7816-4 5-bit short file identifier (SFI). The terminal knows the master key KID that is required to process the DD data from the card. This enables the same derived key Kd as the card to be built: Kd = f(MK, DD) where f represent any diversification algorithm and MK the master key identified by KID;
(ii) a data diversifier number (DD number) that contains the reference of the diversifier data within the diversifier file pointed to by SFI;
(iii) a KID, indicating which (Data Encryption Standard) (DES) key will be used. The card stores the diversified key Kd in the card applicable key file, the terminal stores the master key MK in a secure device; and
(iv) an eight-byte Random Sequential Number (RSN) to provide one-way identification.

In summary, the card has been loaded with a derived key 'Kd'. Derived key Kd is the result of the diversification of the master key (MK identified by its identifier KID) with the diversification data DD. This process is used as it is a security threat to store the same master cryptographic key in every smartcard.

The command is received 108 at Smartcard 104, where at least the diversifier data DD is extracted from the file identified by the SFI and DD number.

Preferably, the diversifiers are stored in fixed length record files of 8x8-byte record. On receipt of the "Init for Mutual Authentication" command, a RNC is generated by the Smart Card 110. The RNC ensures that the return message from Smartcard to the fixed terminal is valid only in this mutual authentication phase.

In addition, Cryptograms R1 and S1 are generated using Kd, as shown in step 112, with Kd identified by the master key from which it derives: KID. In other words, the card is forced to exercise its Kd to encrypt the message involved with RSN and RNC.

A session key is then agreed by both the terminal and Smartcard. Clearly, the session key (Ks) is generated such that it is impossible to determine a card key from the session key (Ks).

To avoid the potential danger of a third party searching a card from an exposed session, the session key (Ks) shall not be a function of the card key. In particular, this requirement is mandatory when a short card key, such as single DES key, is used.

In the preferred embodiment of the invention, the "Init for Mutual Authentication" command 106 requires a 25-byte return message 114 from the Smartcard 104. In the 25-byte message 114, one byte is for the Key Version Number (KVN) that the Terminal 102 needs to identify the exact key being used in the Smartcard 104.

A further concatenated 8-bytes are used for the key diversifier (DD), specified by SFI, and the DD number. A further eight bytes are R1 = E(RNC ⊕ RSN) where the RNC is an 8-byte random number from the card and the E is an encryption algorithm such as DES. The last 8-bytes are S1 = Encrypted (RNC ⊕ DD).

The Terminal 102 receives the 25-byte message 116. The Terminal 102 generates the Kd value 118 to be used by the Smartcard 104 by using the Master key MK, the received and extracted KVN and DD values. Once the Kd value has been obtained, the Terminal 102 is able to decrypt R1, S1. The Terminal 102 may then retrieve:
(i) RNC' by decrypting, with Kd, the cryptogram R1: RNC' = D(R1) ⊕ RSN, and
(ii) DD' by decrypting, with Kd, the cryptogram S1: DD'= D(S1) ⊕ RNC'.

Advantageously, the current RSN is then unavailable and any future replay of R1 and S1 will be detected, as shown in step 126.

If the retrieved DD' is determined to be equal to the DD in the received data, in step 122, then the Terminal 102 is confident that the Smartcard 104 (Kd and RNC) is valid.

The Terminal 102 generates an eight-byte random number RNT, as shown in step 124, and builds (RNC ⊕ Kd) that will be used as the key to encrypt R2, S2:
(i) R2 = encrypted RNT, using the key (RNC ⊕ Kd), and
(ii) S2 = encrypted (RNT ⊕ IDt), using the key (RNC ⊕ Kd). IDt = Terminal ID, as shown in step 130.

The Terminal 102 transmits the "Mutual Authentication" command including the following information to the Smartcard 104, in step 132:
(i) IDt, that is the terminal ID;
(ii) R2 = E(RNT) where E() indicates encrypted and the RNT is a random number from the terminal; and
(iii) S2 = E(RNT⊕IDt).

The "Mutual Authentication" is received at the Smartcard 104 in step 134. The Smartcard 104 uses the reverse processes to step 130, to obtain the RNT value as shown in step 136. The Smartcard 104 checks to see if the determined IDt' equals the received IDt, in step 138. If there is a match, the Smartcard 104 knows that the Terminal (RNT) is valid, as the Terminal 102 has generated the same Kd, as shown in step 142.

The Smartcard 104 generates the session key Ks, with the individual RNC and RNT values destroyed safely, as shown in step 140. At the same time, the Terminal 102 generates the same Ks, with the individual RNC and RNT values destroyed safely, as shown in step 144. The mutual authentication process, according to the preferred embodiment of the invention, is finished as shown in step 146.

If a single-length session key is required, in step 140 and step 144, Ks = (RNC ⊕ RNT). However, if a double-length session key is required, in step 140 and step 144, Ks = ((RNC ⊕ RNT), (RNC - RNT)).

The actual commands transferred between the Terminal 102 and Smartcard 104 in the mutual authentication process are shown in Tables 1 to 3.

**Table 1:**

| Application Protocol Data Unit (C-APDU) Message 106 for Init for Mutual Authentication | |
|---|---|
| CLA | 0x80 |
| INS | 0x7A |
| P1 | SFI on the five most significant bits (msb) and DD number on the three least significant bits (lsb) P1=0x00 is reserved for personalisation only |
| P2 | KID P2=0x00 is reserved for personalisation only |
| Lc | 0x08 |
| Data field | 8 bytes for RSN |
| Le | 0x19, 1 byte for KNV, 8 bytes for DD the diversifier, 8 byte for R1, 8 bytes for S1. |

**Table 2:**

| Response Application Protocol Data Unit (R-APDU) Message 114 for Init for Mutual Authentication | |
|---|---|
| Data field | KVN\|\|DD\|\|R1\|\|S1 |
| SW1-SW2 | Status bytes |

**Table 3:**

| Status words of response message. | | |
|---|---|---|
| SW1 | SW2 | Meaning |
| 0x90 | 0x00 | Successful operation |
| 0x6A | 0x88 | Key or Key file not found |
| 0x69 | 0x82 | Crypto verification failure |
| 0x69 | 0x83 | Secret blocked |
| 0x69 | 0x84 | Secret file invalidated |
| 0x6E | 0x00 | CLASS not supported |
| 0x6D | 0x00 | INS not supported |
| 0x67 | 0x00 | Wrong Lc or Le |
| 0x6B | 0x00 | Incorrect P1 or P2 |
| 0x6A | 0x82 | File not found |

The Terminal 102 sends the "Mutual Authentication" command 132 to the Smartcard 104 with two purposes. The first purpose is to acknowledge that the Smartcard 104 has been verified as a valid Smartcard 104 since the Terminal 102 generates the same card key according to KVN and diversifier from the Smartcard 104. The second purpose is to provide information about the Terminal 102 itself to the card to authenticate the Terminal 102.

The key for the above encryption is Kd ⊕ RNC.
Advantageously, the "Mutual Authentication" command does not require any return transmission other than a status word informing the terminal of the completion status of the operation.

If the status word is 0x6982, the card rejects the terminal: The key Kd is not authenticated and the card files, to which access is granted upon presentation of this key, remain locked.

**Table 4:**

| Command Application Protocol Data Unit (C-APDU) message 132 for Mutual Authentication | |
|---|---|
| CLA | 0x80 |
| INS | 0x7C |
| P1 | 0x00 |
| P2 | 0x00 |
| Lc | 0x18 |
| Data field | R2\|\|S2\|\|Idt |

**Table 5:**

| Response Message 140. | |
|---|---|
| Data field | Empty |
| SW1-SW2 | Status bytes |

**Table 6:**

| Status words of response message. | | |
|---|---|---|
| SW1 | SW2 | Meaning |
| 0x90 | 0x00 | Successful operation |
| 0x6A | 0x88 | Key or Key file not found |
| 0x69 | 0x82 | Crypto verification failure |
| 0x69 | 0x83 | Secret blocked |
| 0x69 | 0x84 | Secret file invalidated |
| 0x6E | 0x00 | CLASS not supported |
| 0x6D | 0x00 | INS not supported |
| 0x67 | 0x00 | Wrong Lc |
| 0x69 | 0x85 | Command out of sequence |
| 0x6B | 0x00 | Invalid P1 or P2 |

A Debit Purse command message will decrease an E-purse current balance if the resulting new balance is greater than or equal to the predefined minimum balance. The message will include the short file identifier (SFI) of the E-purse file as well as the amount to be debited.

**Table 7 -**

| Debit Purse command APDU **Message** | |
|---|---|
| CLA | '80' |
| INS | '56' |
| P1 | See table 8 |
| P2 | '00' |
| Lc field | '04' bytes |
| Data field | Amount to be debited |
| Le field | '04' |

**Table 8 -**

| Coding of the P1 | | | | | |
|---|---|---|---|---|---|
| | b8 | b7 | b6 | b5 | Meaning |
| b4 | b3 | b2 | b1 | | |
| | 1 | 0 | 0 | x | P1: b8-b6 = (100)b, then b5-b1 are a short EF identifier, exclude (11111)b . If b5-b1 are all 0, then use current file. |
| x | x | x | x | | |

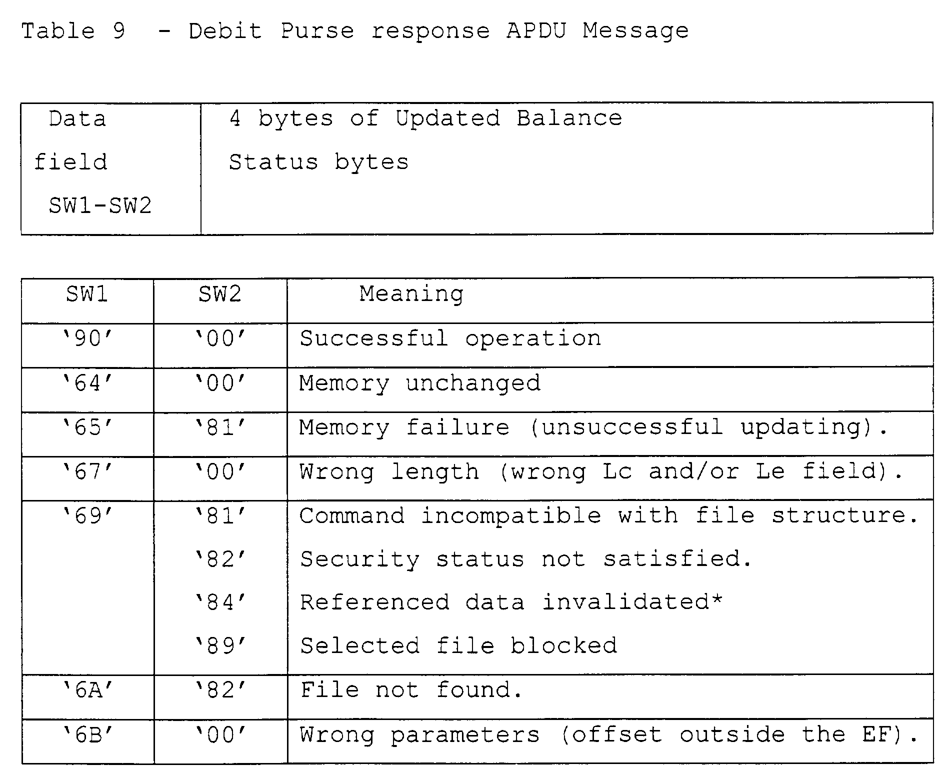

The updated balance is less than the predefined minimum balance allowed.

A Reverse Debit command message will increase the E-purse current balance, when the amount to be credited is less than or equal to the amount previously debited in the last transaction. The message will include the short file identifier (SFI) of the E-purse file and the amount to be credited.

**Table 10 -**

| Reverse Debit command APDU message | |
|---|---|
| CLA | '80' |
| INS | '58' |
| P1 | See table 7 |
| P2 | '00' |
| Lc field | '04' bytes |
| Data field | Amount to be credited |
| Le field | '04' |

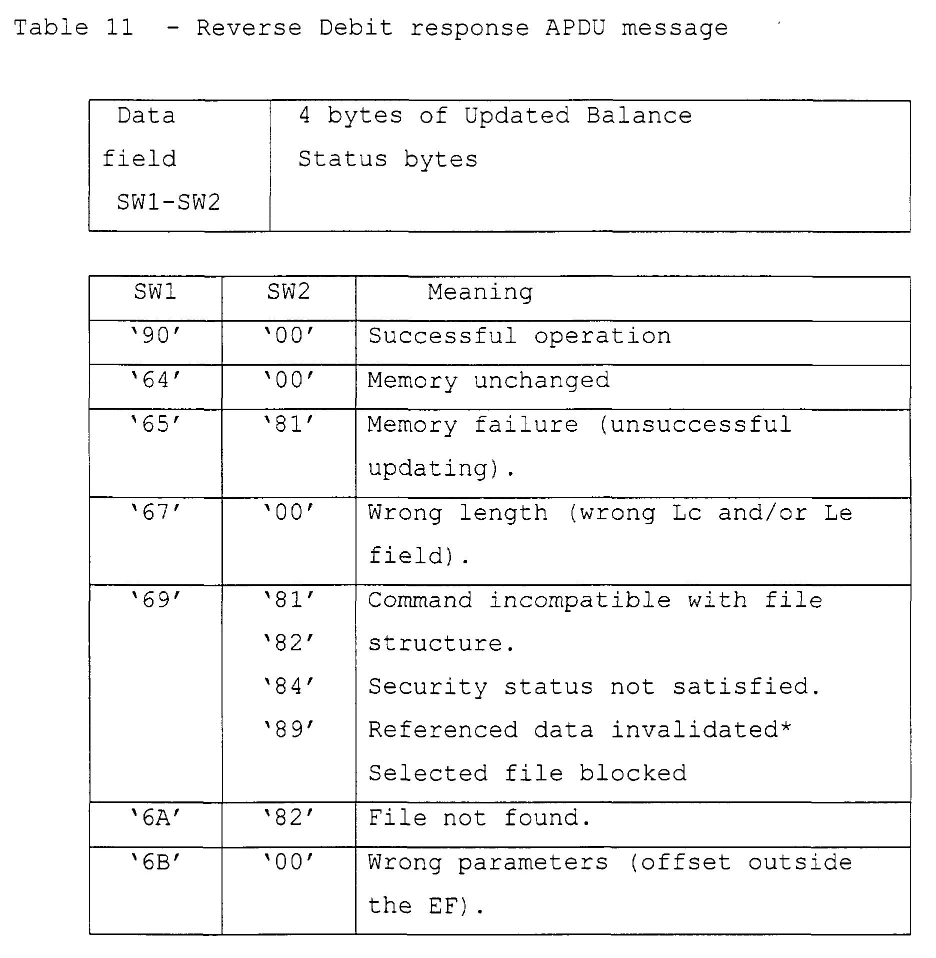

The amount to be credited is more than the amount previously debited in the last transaction.

The Commit command message will allow the card to commit all the data it has updated during the session. The Commit will contain an eight-byte MAC over all bytes exchanged during the session.

**Table 12 -**

| Commit command APDU message | |
|---|---|
| CLA | '80' |
| INS | '78' |
| P1 | '00' |
| P2 | '00' |
| Lc field | '08' |
| Data field | SACT |
| Le | Empty |

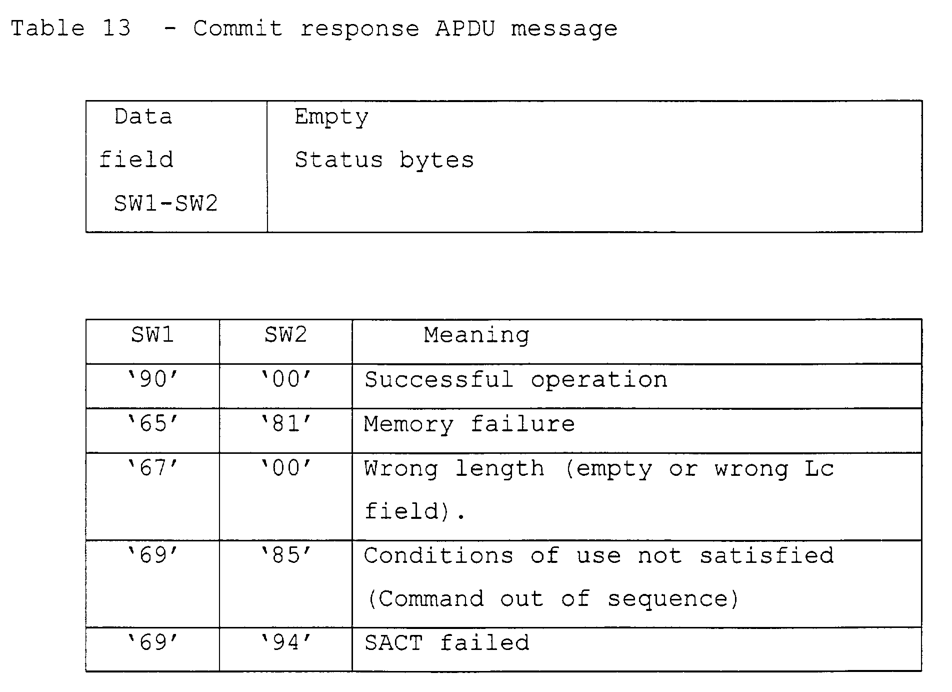

### Session key generation

The attached flow chart shows that the session key Ks = (RNC⊕RNT, RNC-RNT) can be obtained on both the Fixed Terminal 102 and the Smartcard 104.

To use this protocol, a constant may be agreed for the DD beforehand.

For example, the DD may be the ASCII string of the date carrying personalisation. Alternatively, the DD may just be a constant such as 0x0102030405060708. When the card reads "P1=0" and "P2=0", it will use the agreed value as DD to carry out the protocol.

In the preferred embodiment of the invention, Kd is used to securely exchange RNC and RNT. A successful "Init_for Mutual Authentication/ Mutual Authentication" message has three effects:
(i) Kd key is authenticated;
(ii) a session Key Ks, that has no connection with Kd is built (Ks depends only on RNC and RNT); and
(iii) the critical section signal is sent to the Smartcard core operating system.

Advantageously, with regard to the security in setting up and mutually authenticating the transaction, it is difficult to search Kd with R1, S1 and DD as a third party has to guess the RNC being used.

As a result, the on-board random number generator enhances the security of the protocol in which a single length key cryptosystem, such as DES, is used.

Furthermore, the process is beneficially arranged such that disclosure of the session key Ks may not be exploited to attack the card key Kd.

As an additional fail-safe mechanism, the scheme still works when the card random number generator (RNG) fails. However, in this case, the system's security will solely rely on the strength of the underlying encryption system.

A random sequential number RSN is sent to the card from step 106 to resist possible replay attack. Any re-play of R1 and S1 can be detected at step 122.

Advantageously, the Smartcard 104 is verified by the Terminal 102 at step 122 and the Terminal 102 is verified by the Smartcard 104 at step 138.

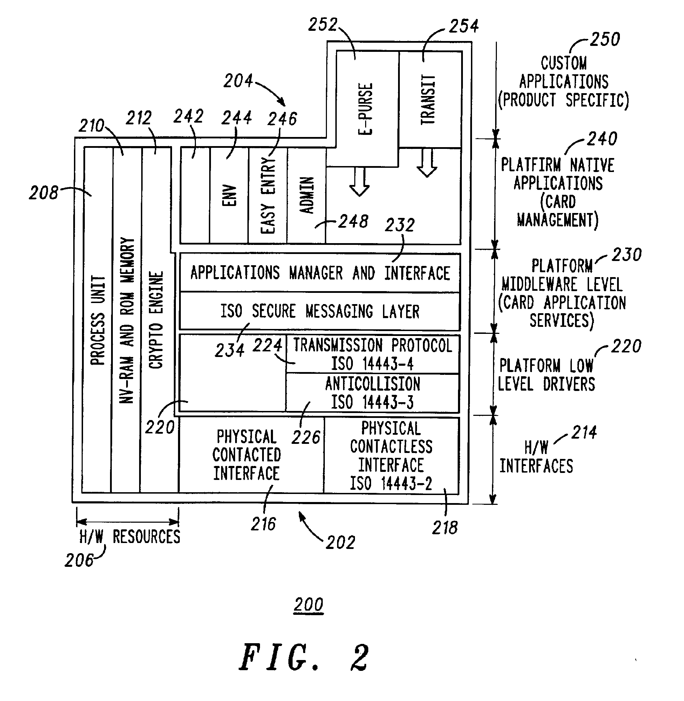

In accordance with a preferred embodiment of the present invention, a portable device (Smartcard) Operating System (OS) Architecture 200 is also described, as shown in relation to FIG. 2. The Operating System Architecture 200 is divided into distinct areas:
(i) the OS Core 202; and
(ii) the Smartcard OS Applications 204.

The OS Core 202 includes hardware resources 206, that includes a processing unit 208, coupled to a Non-Volatile Random Access Memory (NV-RAM), Random Access Memory (RAM) and read-only memory (ROM) 210, coupled to the crypto engine 212.

The OS Core 202 also includes hardware interfaces 214, that includes a physically-contacted interface 216 and a physically-contactless interface 218. In addition, the OS Core 202 includes platform low-level drivers 220 having transmission protocol 224 and anti-collision functions 226. Platform middleware level (card application) services 230 are also provided, including an application manager and interface 232 and ISO secure messaging layer 234.

In summary, the aforementioned Smartcard configuration forms the card OS core and provides the following services:
(i) communication: communication driver and protocol stack; and
(ii) middleware: made of an optional message ciphering/deciphering layer and a mandatory (optional) message routing that direct the data to/from the proper application to/from the terminal.

The Smartcard OS Applications 204, have a platform native application (Card management) function 240. This platform native application function 240 includes Init 242, EMV 244, easy entry 246 and admin 248. Custom applications (product specific) functions 250, including E-purse 252 and Transit 254 are provided. In these applications the high level APDU, as described above, are processed.

As an example: the C-APDU 'INIT_FOR_MA' arrives through the Contact-less interface. The transmission protocol stack de-capsulates the command and the application manager sends the relevant data to the application in control. The application processes the data and sends its response through the same channel.

The portable device (Smartcard) Operating System 200 ensures the administration and the security of the secured file system mapped in the Non-Volatile Random Access Memory (NV-RAM) 210. The Operating System Core features the services used by the various applications that are implemented on top of the OS core and use its resources.

### Session Details.

A transaction using a portable device is basically a succession of elementary read and write operations/instructions on data stored in the NV-RAM 210 of the Smartcard. In order to avoid any inconsistency in the data stored in the NV-RAM 210 of the Smartcard, it is important that these elementary read and write operations are either all performed ("Committed") or not performed at all ("Roll-Backed").

As an example: if the transaction is to debit a value and log this debit, it would not be acceptable that the debit operation is performed without it being logged.

The functional operation between the start of the transaction and the end of the transaction is generally termed the 'Critical Section'. All modifications of the NV-RAM data performed during the critical section must be either committed atomically after reception of a valid "Commit" or disregarded.

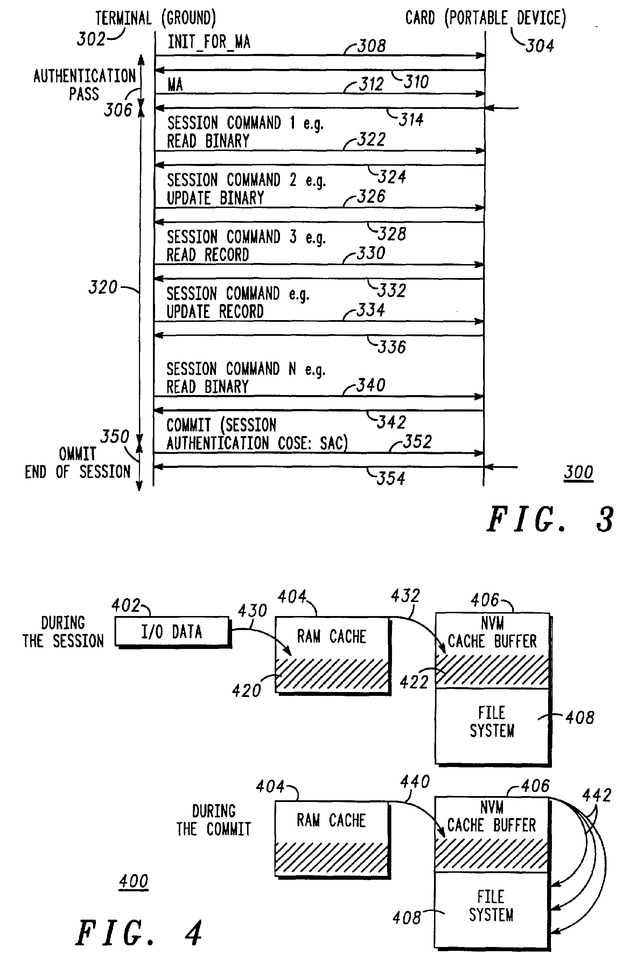

Referring now to FIG. 3, a flowchart 300 of a Session Management data flow between a fixed terminal 302 and a Smartcard portable device 304 is shown. The mutual authentication process 306 is performed, as described earlier with reference to FIG. 1.

The mutual authentication process includes the Terminal 302 transmitting the "Init for Mutual Authentication" message 308 to the Smartcard portable device 304, which responds with the 25-byte return message 310 from the Smartcard portable device 304.

The "Mutual Authentication" message 312 is then sent from the Terminal 302 to the Smartcard portable device 304, which responds 314 to complete the mutual authentication process. This process ensures that a session key is built by both the Terminal 302 and the Smartcard portable device 304, using the random numbers exchanged during the authentication process.

The critical section is commenced by a BEGIN CRITICAL SECTION signal sent to the OS core of the Smartcard portable device 304 by one of its embedded applications 240,242,244,246,248,250 or 254 after a successful mutual authentication pass. During the critical section, the data directed to the portable file system, as shown in messages "Session Commands 1-4 322, 326, 330, 334 are written into cache buffers and a session authentication code (SAC) is computed of the data sent and received from/to the Smartcard portable device 304.

The SAC computed at the Terminal 302, as calculated from all data sent to, and all data received from, the Smartcard portable device 304 is termed a SACT. The SAC computed with the same data on the Smartcard portable device 304 side is termed a SACC.

The algorithm to compute the SAC depends on the cryptographic capabilities of the involved device. It may be, for example, a Chained (CBC) DES using the session key. The purpose of this SAC is to compute a signature of the exchanged data.

The session is terminated upon reception and successful verification of the SACT as transmitted 352 from the fixed Terminal 302 to the Smartcard portable device 304. The Smartcard portable device 304 compares the incoming SACT with its internally computed SACC. The comparison status id is then sent back 354 to the Terminal 302.

If there is a match, the Smartcard portable device 304 and the Terminal 302 have completed an authenticated transaction and the Smartcard portable device 304 initiates its commit/end of session algorithm 350. If there is no match, the portable device rejects the transaction. The data in the NV-RAM cache buffer are disregarded and zeroed and the transaction is cancelled.

### Commit and Tear Recover Algorithms

The portable device Operating System features a mechanism that ensures the atomicity of NV-RAM data update operations. This mechanism is built upon internal resources of the Operating System core used by the native or product-specific applications. These internal resources include:
(i) Internal request to notify the portable device operating system core of the beginning of a critical section: 'BEGIN CRITICAL SECTION';
(ii) Internal request to notify the portable device operating system core of the ending of the critical section followed by actual data update: 'COMMIT';
(iii) Internal request to notify the portable device operating system core of the ending of the critical section followed by data update cancellation: 'ROLLBACK' ;
(iv) A check algorithm at portable device boot-up time;
(v) A RAM cache buffer; and
(vi) A Non-Volatile Memory cache buffer (NV-RAM).

Referring now to FIG. 4, a Commit Algorithm according to a preferred embodiment of the present invention is shown. Initially, both the RAM Cache 404 and NV-RAM cache 406 are empty and zeroed 420, 422. The data flow during a critical session includes the Smartcard portable device Operating System intercepting each incoming data 402 that impacts the NV-RAM file system. The OS encapsulates the data into a controlling structure named Anti Tear Data Structure (ATDS). These structures are stored into the RAM cache, as shown in data flow 430.

When the RAM cache 404 is full, its content is copied 432 into the NV-RAM cache buffer 406. The RAM cache is then zeroed. The critical section is ended by the reception of the END CRITICAL SECTION signal associated with a COMMIT or ROLLBACK directive.

This RAM cache has been introduced to cope with the fact that the NV-RAM (usually EEPROM) is updated by block: N bytes of data can and is preferably written in one single programming operation. Accumulating data into the RAM cache until N-bytes are ready to be programmed minimises the number of update operations and therefore minimises the total transaction time. This algorithm is a major contribution to the optimisation of the transaction time.

The portable device Operating System processes the COMMIT directive by copying 440 the ATDS that are in the RAM cache 404 into the EEPROM cache 406. The RAM cache is then zeroed.

The commit is carried out i.e. the file system is updated with the ATDS data, as shown in data flow 442. The EEPROM cache 406 is then erased. The execution of the ROLLBACK directive is performed by erasing the RAM cache 404 and EEPROM cache 406.

### Anti-Tear Algorithm

When the portable device boots up, the content of the NV-RAM scratch buffer is checked to see whether or not the file system was entirely updated during the last commit process. If the previous commit has been aborted, the Operating System continues to commit before accepting any other request. The portable device operating system zeros the NV-RAM cache and is ready to accept any request.

In the less-preferred, alternative embodiment of the present invention, a rollback (sometimes termed 'tear recovery') mechanism is provided. The 'tear recovery' or 'rollback' is a means used to ensure that the data stored in the Smartcard would return to a stable state after an unexpected event, such as power off during a transaction. The data on the card might be stored in one or many ISO 7816-4 compliant elementary file(s).

As mentioned earlier, a new roll back mechanism is needed that reduces the time needed for the data stored in the Smartcard to return to a stable state, particularly for the Contact-less Smartcard environment. In the preferred embodiment of the invention, this card will have an ISO 7816-4 compliant file system.

Data where modifications must be secured by a tear recovery mechanism must be stored in 7816-4 record files. These files can be linear fixed or cyclic, depending on the card design option. Furthermore, the files should have more than one record (actual number plus one).

In the preferred embodiment of the present invention, namely that of ISO 7816-4, record files cannot contain more than 254 records. A cyclic file is a linear fixed record file with a specific pointer management. A pointer named "last record pointer" which indicates the last updated record is stored in the file header.

The data record structure is shown in Table 14:

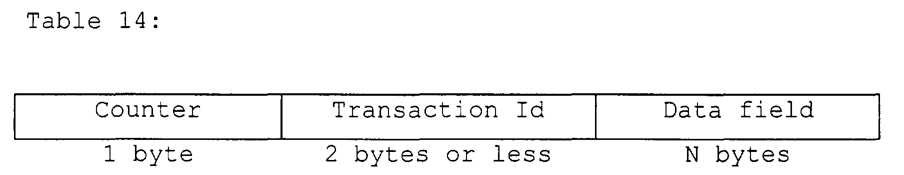

The 'transaction Id' is a number provided by the terminal to select and stamp the transaction. A transaction session begins with the ISO 14443 card selection and ends with the card power off. The generation of this id is explained below. This number is associated with only one transaction scheme.

In the case of a cyclic file, the 'counter' byte is used to secure a tear, which occurs after the record update and before the update of the 'last record pointer' in the file header. The 'counter' byte may also be a "pointer" of the last updated record in the case of linear fixed file implementation, which could lead to the creation of a new type of cyclic record file. This byte is preferably used as an unsigned value.

A file named 'links file' features the Id of all the files involved in the transaction. All these files must be modified together or remain together in the initial state. It is an ISO 7816-4 record file containing one or more record. This file can be linear fixed or cyclic depending on the card design option.

Each record has a length depending on the maximum number of files involved, as shown in Table 15:

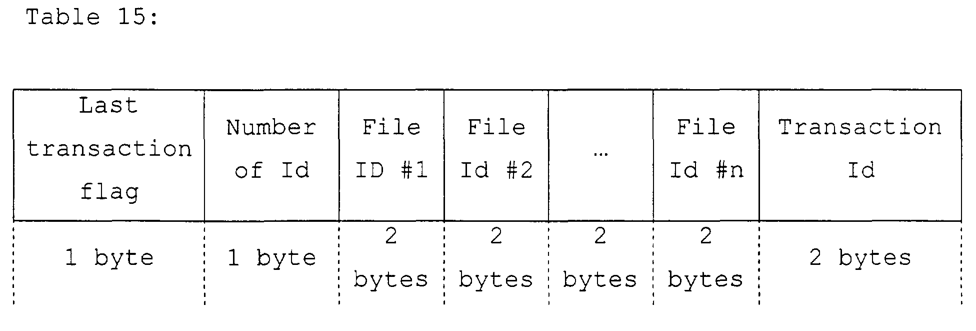

where:
(i) The 'last transaction flag' is set when the transaction starts and is cleared after a complete and successful transaction. It is the transaction tear indicator;
(ii) The 'number of Id' is the number of files secured by the tear recovery mechanism associated with the Transaction. This number cannot be greater than a value fixed by the card's or the terminal's application design; and
(iii) The Ids of each involved file(s) in this secured transaction follows the 'Number of Id' field.

It is within the contemplation of the invention that the 'Transaction id', or the sequence of files involved in the transaction, may be managed by the terminal. In this case the 'links file' may be used to store the 'last transaction flag' only or a part of the information described above.

In the preferred embodiment of this aspect of the invention, the card design may be configured in a number of ways. The preferred configuration is as follows.

### Transaction Id:

There are numerous ways to generate a Transaction Id, the preferred options being:
(i) generated dynamically at the beginning of the transaction by the terminal; and
(ii) registered definitively at the creation of the associated record of the 'links file'.

The Transaction Id length may be one or two bytes depending on the Tear recovery configuration.
The preferred four ways of designing a Tear recovery mechanism use record files according to the combination of two 'links file' options and two data file options:

### (i) The 'links file' options:

(ia) The 'links file' may be designed once, with as many records as the number of possible transaction schemes. If there is no more than 255 transactions scheme, one byte length 'Transaction Id' is enough. If there is more than 255 transactions scheme, two bytes length 'Transaction Id' must be used.
   Each record's 'Transaction Id' is written once. It is within the contemplation of the invention that the transaction scheme of one or more record may be updated by the terminal 'on-the-fly'.
(ib) The 'links file' may be updated dynamically with a transaction Id generated by the terminal. The terminal may use only one record in case of single record file. It may use more than one record in a cyclic file. In this case, the terminal has to write a record corresponding to the new transaction scheme with the files involved (useful to trace previous transactions).

### (ii) The data files may be cyclic or linear fixed record files.

(iia) Linear fixed record files case:
   In this case, the record, which contains the highest 'counter' value, is the last updated record. This highest 'counter' value is selected as follows:
   If the record N has a 'counter' value of M and the next one (N+1) has a 'counter' value of M+1, the record N+1 clearly has the current highest 'counter' value. The same selection continues with the record N+1.

If the record N has a 'counter' value of M and the next one has a 'counter' value NOT equal to M+1, the record N clearly has the highest 'counter' value. It is then the last updated record. The tear recovery mechanism reads the last updated record. It then increments its 'counter' value (now M+1) and modifies its data field. It then updates the next record. If the next record doesn't exist, the first record of the file is updated, as shown in Table 16.

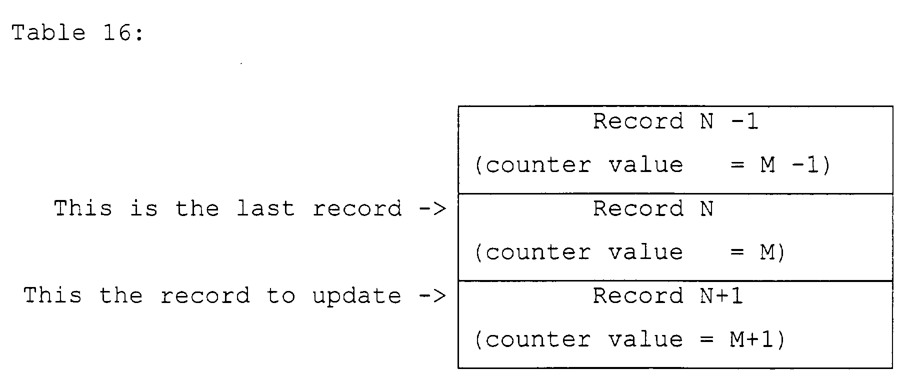

To further explain this operation, let us consider a file that contains ten records, with a last 'counter' value of "56". The structure will be as shown in Table 17 below:

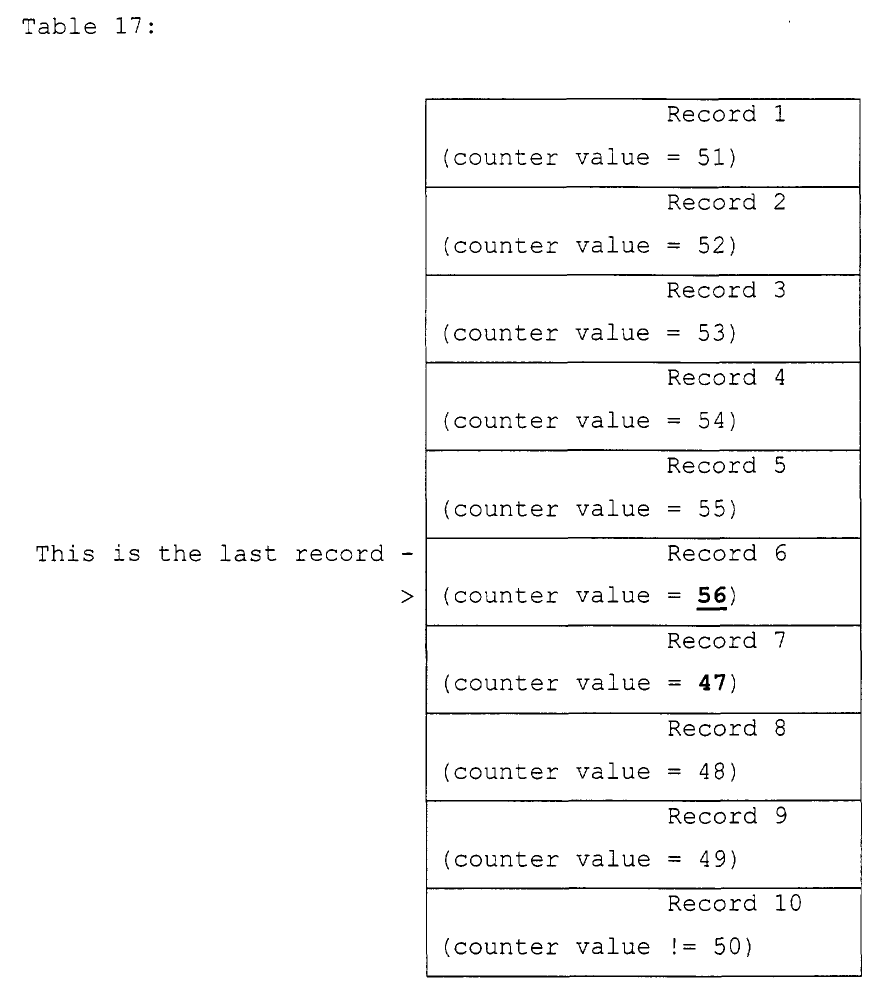

Thus the record 6 is the last updated record. The new record will overwrite the record 7 with a 'counter' value of 57. The result is shown in Table 18 below:

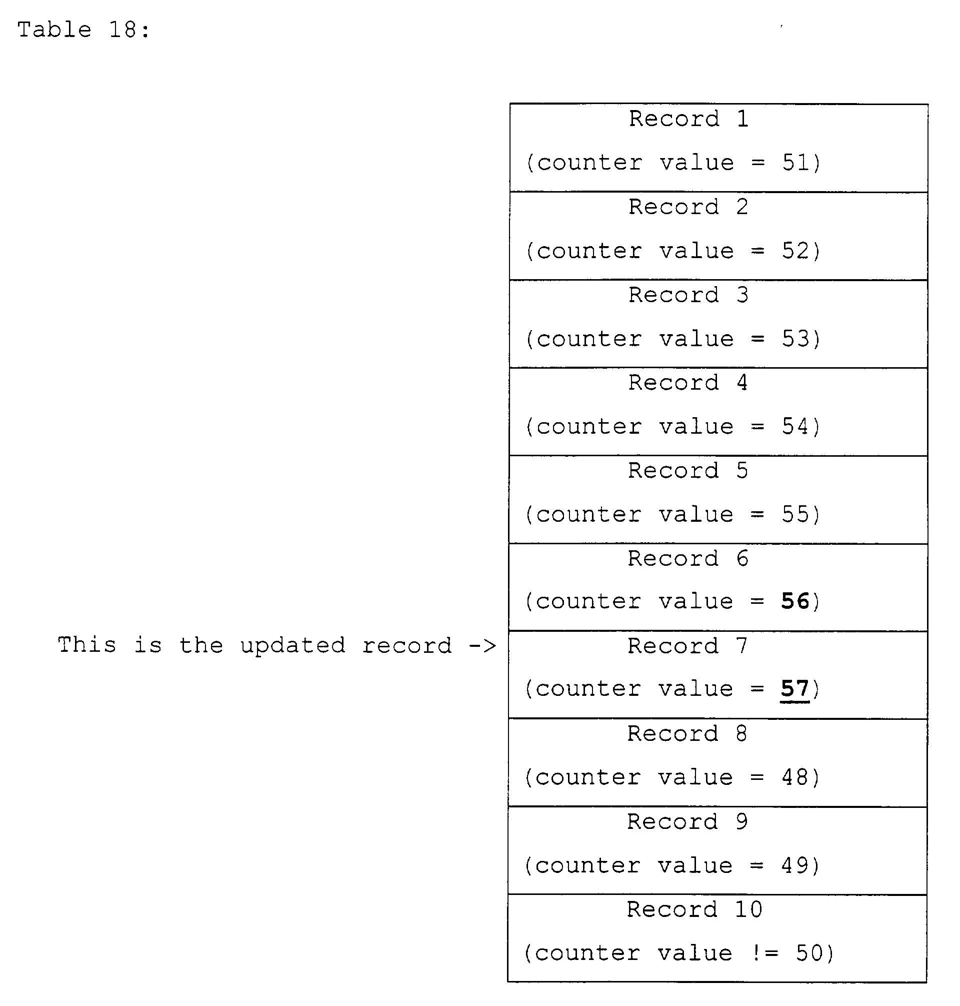

Advantageously, file updating uses only one 'write' instruction. However, it must read N records to select the last updated record.
(iib) Cyclic record files case:
   In this case, the tear recovery mechanism updated the next record. It takes two 'write' instructions per file to update. The first write instruction is performed for record update. The second write instruction is performed for the 'last record pointer' update in the file header. Advantageously, no read record is performed.

To clarify the Tear recovery mechanism in accordance with this aspect of the invention, let us first consider the nominal case where the previous transactions were all conducted successfully. All of the 'last transaction flag(s)' are therefore cleared.

If the files involved in the transaction are known in advance, the appropriate record is selected in the 'links file'. If the files involved in the transaction are not known in advance, a new record in the 'links file' is dynamically created by a terminal "CREATE_RECORD" command.

In both cases, the 'last transaction flag' of the record is set to indicate that the transaction is in progress and the 'transaction id' is set or updated to the current Transaction Id if the terminal has to generate it. Files involved in the transaction (registered in the current record of the 'links file') should be modified.

A new record containing the new data (see record structure described above) is created with its 'transaction Id' field set to the current Transaction Id. The new record's 'counter' field set to the value of previous record plus one. At the end of the transaction, the 'last transaction flag' of the 'links file' is cleared to indicate that the transaction has completed successfully.

Let us now consider a "Recovery" case, where a previous transaction has not successfully completed. If a tear appears before the 'Last transaction flag' update, no recovery is needed. This is due to the fact that the last transaction has not had enough time to perform any operation.

If a tear appears after the 'Last transaction flag' update has occurred a recovery operation is needed. One 'links file' record has its 'Last transaction flag' set. The recovery is finished if the record is inconsistent (namely if (i) a file Id does not correspond to an existing file or (ii) if the number of the file Id is greater than allowed). An error is returned by the card if the OS is designed to support this tear recovery mechanism.

For each file registered in this record, the terminal or the Smartcard application looks for a current record with a 'transaction Id' equal to the 'links record' 'transaction Id' field. If there is a match, and if the file is cyclic, the 'last record pointer' of this file is updated to point on the previous record, which contains the previous data. The roll back is implemented as a file pointer update.

If there is a match, and if the file is a linear fixed file, the last updated record 'counter' value is set to the oldest record 'counter' value that is in the file, minus one. To further explain this operation, let us consider a file that contains 10 records, with a last 'counter' value of 56. The structure will be as shown in Table 19 below:

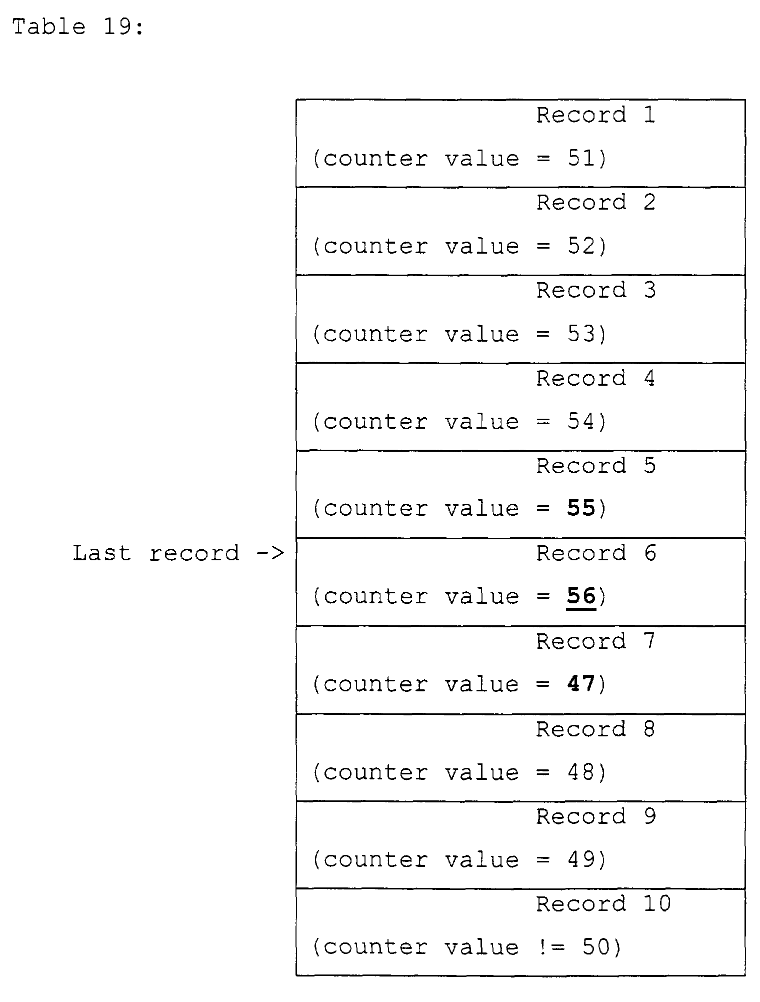

Thus, the record "6" is the last updated record. A rollback has to be performed. The new 'counter' value of record 6 is updated to the oldest record, namely (47) minus one (46). Therefore, the record 5 becomes the 'last record'.

The result is:

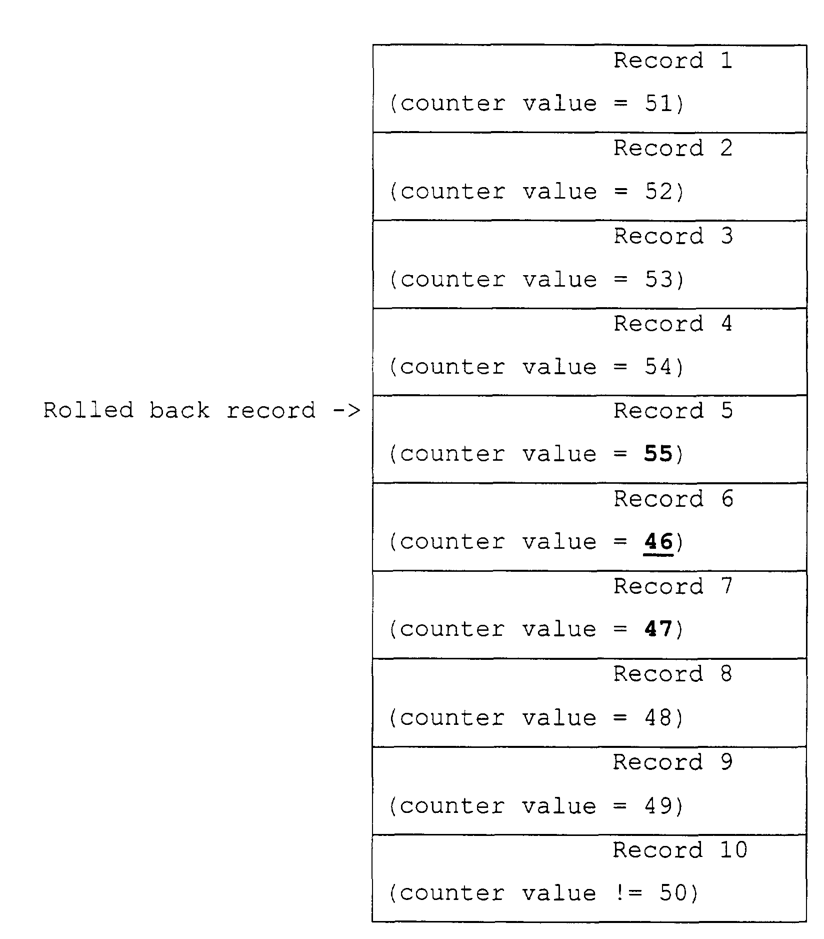

The 'Last Transaction' flag of the 'links file' is then cleared to reflect a stable state.

It is noteworthy that a power off during the roll back process cannot affect the stability of the tear recovery system as the current record of the rolled back file does not have the same 'Transaction Id'. Hence, it cannot be rolled back anymore. The tear recovery will continue until the previous stable state is reached.

To quantify the benefits provided by the above alternative roll-back mechanism, the following results are provided. The following timings are computed for a ST16RF48 in Contact-less mode with an external radio frequency (RF) signal of 13.56 MHz.

In the case of a dynamic 'Transaction Id' generation, there is 15*10/⁻⁶ chance of failure for a 16-bit id. There is less than 2.5*10⁻¹⁰ chance of failure for a 32-bit id (in the case where 16 bits are not enough). In the case of static 'Transaction Id' attribution (one time transaction scheme registration), there is no chance of failure.

The performance of the tear recovery mechanism may be assessed according to the four alternative implementations described above:
(i) Data file is a Cyclic record file and the Tear recovery mechanism is carried out in the Terminal management. This is the best case if the involved cyclic record files have more than 4 records. It takes 2 write EEPROM accesses per file (typically 20 ms). It can be implemented using only ISO commands.
(ii) Data file is a Linear fixed record file and the Tear recovery mechanism is carried out in the Terminal management. It takes one write EEPROM access per file (typically 10 msec's) and needs as many read commands as record numbers at most. It can be implemented using only ISO command. Because of the read command delay (more than two msec's per read command including transmission time at 105.9 Kbps), this case is not viable if the involved record files have more than four records.
(iii) Data file is a Cyclic record file and the Tear recovery mechanism is carried out in the Card management. This option takes two write EEPROM accesses per file (typically 20 msec).
(iv) Data file is a Linear fixed record file and the Tear recovery mechanism is carried out in the Card management. This option is the fastest because it takes about 5000 cycles at most to compute an internal record selection (three msec for 254 record, 130 µsec for 11 records). It needs only one write EEPROM access (typically 10 msec).

In the case where N files are involved in the current transaction scheme, and a tear appears after M files update (M < N), the number of 'write' instructions for recovery and transaction completion, for each of the four implementation options (above) are:
(a) Recovery, for options (i) and (iii) requires ((M*2)+1) write access instructions;
(b) Recovery, for options (ii) and (iv) requires (M+1) write access instructions;
(c) Transaction completion, for options (i) and (iii) requires ((N*2)+2) write access instructions; and
(d) Transaction completion, for options (i) and (iii) requires (N+2) write access instructions.

Hence, in this particular case, option (iv) appears to be the most efficient. However, this case needs an OS specific tear recovery feature.

Applying the above equations to real-life situations results in the following. Let us consider the situation where three files are involved in the current transaction scheme, and a tear appears after two file updates:
(a) Recovery, for options (i) and (iii) requires five write access instructions;
(b) Recovery, for options (ii) and (iv) requires three write access instructions;
(c) Transaction completion, for options (i) and (iii) requires eight write access instructions; and
(d) Transaction completion, for options (i) and (iii) requires five write access instructions.

Alternatively, for the situation where five files are involved in the current transaction scheme, and a tear appears after three file updates:
(a) Recovery, for options (i) and (iii) requires seven write access instructions;
(b) Recovery, for options (ii) and (iv) requires four write access instructions;
(c) Transaction completion, for options (i) and (iii) requires twelve write access instructions; and
(d) Transaction completion, for options (i) and (iii) requires seven write access instructions.

It will be understood that the transaction system, Smartcard/portable device, Terminal and methods of performing a transaction, as described above, provide the following advantages:
(i) provides a high level of security as the transaction starts with a robust MUTUAL_AUTH and ends with a COMMIT signal sent with a cryptographic signature of all data using a random session key;
(ii) data integrity is ensured by a use of a critical section mechanism. This mechanism has been designed to ensure a fast commit processing time;
(iii) a fast transaction time is ensured by (a) merging the initial MUTUAL_AUTH with the session key generation with the beginning of the critical section; and (b) merging the end of the transaction with the cryptographic authentication of the transaction;
(iv) the mechanism requires limited proprietary commands, namely two new commands (INIT_FOR_MA and MA) at the beginning of the session and the introduction of one new command (COMMIT) at the end of the session;
(v) the mechanism exchanges well known ISO/IEC 7816-4 commands between the Smartcard device and the terminal during the session, thereby significantly limiting the complexity of the solution; and
(vi) the optimised roll back mechanism performs at more than twice the speed of prior art mechanisms.

It will, of course, be understood that a smart card or terminal as described above will typically be constructed around one or more integrated circuits that are adapted to provide the required functionality described above.

Thus, a transaction system, Smartcard/portable device, Terminal and methods of performing a transaction have been provided whereby the problems associated with prior art arrangements have been substantially alleviated.

## Claims

1. A method of mutually authenticating a transaction or a message between a Terminal (102) and a Smartcard (104), the mutual authentication method **characterised by** the steps of:
transferring key data between a Terminal and a Smartcard; and
generating a card key (Kd) at the Terminal (102) based on said key data wherein the generated card key (Kd) is equal to the card key of the Smartcard (104) thereby authenticating a valid Smartcard;
and/or
generating a Terminal identifier at the Smartcard (104) based on said key data wherein the generated Terminal identifier (IDt) is equal to the Terminal identifier (IDt) of the Terminal (102) thereby authenticating a valid Terminal (102).

2. The method of mutually authenticating a transaction or a message between a Terminal (102) and a Smartcard (104) according to claim 1, the mutual authentication method further **characterised by** the steps of:
sending (106) a mutual authentication initiation message including a master key identifier (KID) and diversification data identifiers (DD number, SFI) from the Terminal (102) to the Smartcard (104);
processing (108, 110) the mutual authentication initiation message including the master key identifier (KID) and diversification data identifier (DD number, SFO) at the Smartcard (104);
sending (114) a return message from the Smartcard (104) wherein the message includes a card Key version number (KVN);
receiving and processing (116) the return message at the Terminal (102);
extracting the card Key version number (KVN) used in the Smartcard (104) from the return message;
deriving (118) Master key (MK) using retrieved diversification data (DD') used in the Smartcard (104) at the Terminal (102); and
comparing (122) retrieved diversification data (DD') to diversification data (DD) in the received data, to determine if the Smartcard (104) is valid.

3. The method of mutually authenticating a transaction or a message between a Terminal (102) and a Smartcard (104) according to claim 1 or claim 2, the mutual authentication method further **characterised by** the steps of:
transmitting (132) a Mutual Authentication command from the Terminal to the Smartcard (104) wherein the Mutual Authentication command includes a Terminal identifier (IDt) ;
receiving (134) the Mutual Authentication command at the Smartcard (104);
deriving (118) a retrieved Terminal identifier (IDt') used in the Terminal (102) at the Smartcard (104); and
comparing (138) the derived Terminal identifier (IDt') to the received Terminal identifier (IDt), at the Smartcard (104) to determine if the Terminal (102) is valid.

4. The method of mutually authenticating a transaction or a message according to claim 1 or claim 2, the method further **characterised by** the step of:
generating (110) a random number (RNC) at the Smart Card in order to ensure that the return message from Smartcard to the fixed terminal is valid only in the mutual authentication phase.

5. The method of mutually authenticating a transaction or a message according to any one of the preceding claims, the method further **characterised by** the step of:
generating (112) at least one cryptogram (R1, S1) using the first Smartcard derived key (Kd) identified by KID, thereby encrypting the return message (114).

6. The method of mutually authenticating a transaction or a message according to any of preceding claims 1 to 3, wherein the encrypted return message (114) is encrypted using a pre-determined random sequence number generated by the Terminal (102) and a random number generated by the Smartcard (104).

7. The method of mutually authenticating a transaction or a message according to any one of preceding claims 1 to 3 or claim 6, the method further **characterised by** the step of:
deriving (118) the master key (MK) at the Terminal (102) using the card key and the diversification (DD) received from the Smartcard (104);
decrypting (112), at the Terminal (102) at least one cryptogram (R1, S1) using the Terminal extracted second derived key (Kd).

8. The method of mutually authenticating a transaction or a message according to any of the preceding claims, the method further **characterised by** the step of:
retrieving a random number generated by the card (RNC') by applying the at least one decrypted cryptogram and a data diversification (DD) of the Smartcard (104).

9. The method of mutually authenticating a transaction or a message according to any of the preceding claims, wherein the steps of sending an initial mutual authentication message and sending a mutual authentication achieve at least one of: external authentication, internal authentication, session key creation and a beginning of critical section.

10. The method of mutually authenticating a transaction or a message according to any of the preceding claims, wherein the Terminal (102) provides information about the Terminal (102) to the Smartcard (104) to authenticate the terminal (102).

11. A Smartcard (104) adapted to perform any of the method steps of mutually authenticating a transaction or a message according to any of the preceding claims.

12. A Terminal (102) adapted to perform any of the method steps of mutually authenticating a transaction or a message according to any of the preceding claims 1 to 10.

13. A Smartcard command set including the initiating mutual authentication command and mutually authentication command of any one of the preceding claims.

14. A method of generating a session key to authenticate a transaction or a message, in particular according to the method of mutually authenticating a transaction or a message of any of the preceding claims, the method **characterised by** the steps of:
agreeing (146) a session key by both a Terminal (102) and a Smartcard (104), such that a card key cannot be generated from the session key.

15. The method of generating a session key to authenticate a transaction or a message according to claim 14, wherein the method is further **characterised by** the steps of:
generating (140, 144) the session key (Ks), by both the Smartcard (104) and the Terminal (102), using a random number (RNC) generated by the Smartcard (104) and a random number (RNT) generated by the Terminal (102).

16. The method of generating a session key to authenticate a transaction or a message according to claim 14 or claim 15, wherein the method is further **characterised by** the step of:
destroying the generated random numbers (RNC, RNT) prior to agreeing (146) a session key (Ks).

17. The method of generating a session key to authenticate a transaction or a message according to any one of preceding claims 14 to 16, wherein the session key is used to validate transaction data transferred during a transaction.

18. The method of generating a session key to authenticate a transaction or a message according to any one of preceding claims 14 to 17, wherein the session key is generated after a successful authentication process, the method further **characterised by** the steps of:
computing a session authentication code (SAC) by encrypting with session key (Ks) the data sent and received during the transaction or message transfer to avoid replay attack.

19. A Smartcard (104) adapted to perform any of the method steps of generating a session key to authenticate a transaction or a message according to any of the preceding claims 14 to 18.

20. A Terminal (102) adapted to perform any of the method steps of generating a session key to authenticate a transaction or a message according to any of the preceding claims 14 to 18.

21. A dynamic session key of a transaction or a message contained within a mutual authentication method of any of preceding claims 1 to 10.

22. A set of instructions used in a transaction process between a Terminal (102) and a Smartcard (104), wherein the set of instructions is **characterised by** distinct credit purse and debit purse values to ensure that only a key used in the transaction process that allows a reduction of a stored amount is resident on the Terminal (102) for a debiting process.

23. The set of instructions used in a transaction process between a Terminal (102) and a Smartcard (104), according to claim 22, further **characterised by** the key used in the transaction process allowing a reduction of a stored amount from the Terminal (102) to the Smartcard (102) in the debiting process.

24. The set of instructions used in a transaction process between a Terminal (102) and a Smartcard (104), according to claim 22 or claim 23, further **characterised by** the credit purse and debit purse values being pre-defined or updated at a personalisation time of the Smartcard (104), preferably with a maximum balance.

25. A Commit command (352, 354) for use as a final step in a transaction process between a Terminal (102) and a Smartcard (104), the Commit command **characterised in** it uses a session key to validate transaction data passed during a transaction, and it commits data to the Smartcard (104), making such committed data known to the Terminal (102) via a successful command response message.

26. A roll-back mechanism, in a transaction process between a Smartcard (104) having at least one random access memory cache buffer and at least one non-volatile random access memory cache buffer, in particular using the Commit command of claim 25, wherein the roll-back mechanism uses random access memory cache buffers to accumulate transaction or message data prior to completing the transaction or message by transferring the accumulated transaction or message data into a file system contained within the Smartcard(104) or Terminal (102), in order to minimise the number of random access memory updates.

27. The roll-back mechanism in a transaction process between a Smartcard (104) according to claim 26, wherein the roll-back mechanism is automatically enabled after a successful mutual authentication.

28. A method of mutually authenticating a transaction or a message between a Terminal (102) and a Smartcard (104) according to claim 1, or a Smartcard (104) according to claim 11 or claim 19, or a Terminal (102) according to claim 12 or claim 20, or a Smartcard command set according to claim 13, or a method of generating a session key to authenticate a transaction or a message according to claim 14 a dynamic session key of a transaction or a message according to claims 21, or a set of instructions used in a transaction process between a Terminal (102) and a Smartcard (104) according to claim 22, or a Commit command (352, 354) according to claim 25, or a roll-back mechanism according to claim 26, when used in a Contact-less transaction environment.

29. An integrated circuit adapted for use in a Smartcard or Terminal to perform according to any one of preceding claims 11, 12, 19 or 20.
